Europäisches Patentamt

European Patent Office

Office européen des brevets

(19)

(11) Veröffentlichungsnummer: **0 345 280**
**B1**

(12) **EUROPÄISCHE PATENTSCHRIFT**

(45) Veröffentlichungstag der Patentschrift: **14.11.90**

(21) Anmeldenummer: **88901556.6**

(22) Anmeldetag: **16.02.88**

(86) Internationale Anmeldenummer:
**PCT/DE88/00075**

(87) Internationale Veröffentlichungsnummer:
**WO 88/06325 25.08.88 Gazette 88/19**

(51) Int. Cl.⁵: **G 01 N 21/25,** G 06 K 7/10,
G 02 B 6/00, G 02 B 6/04

(54) **VERFAHREN ZUM OPTISCHEN ABTASTEN EINES OBJEKTES UND VORRICHTUNG ZUR DURCHFÜHRUNG DES VERFAHRENS.**

(30) Priorität: **17.02.87 DE 3704960**
**17.02.87 DE 8702417 u**

(43) Veröffentlichungstag der Anmeldung:
**13.12.89 Patentblatt 89/50**

(45) Bekanntmachung des Hinweises auf die
Patenterteilung:
**14.11.90 Patentblatt 90/46**

(84) Benannte Vertragsstaaten:
**AT BE CH DE FR GB IT LI LU NL SE**

(56) Entgegenhaltungen:
**EP-A-0 197 673**
**US-A-3 461 856**
**US-A-3 843 865**
**US-A-3 995 934**
**US-A-4 236 784**

**IBM Technical Disclosure Bulletin, Band 18, Nr.
10, März 1976, (New York, US), J.C. Metzler et
al.: "Variable optical read head" Seiten 3277-
3280**

(73) Patentinhaber: **Birkle, Gebhard**
**Inselgasse 16**
**D-7750 Konstanz (DE)**

(72) Erfinder: **Birkle, Gebhard**
**Inselgasse 16**
**D-7750 Konstanz (DE)**

(74) Vertreter: **Mierswa, Klaus, Dipl.-Ing.**
**Friedrichstrasse 171**
**D-6800 Mannheim 24 (DE)**

Courier Press, Leamington Spa, England.

## Beschreibung

**Technisches Gebiet:**

Die Erfindung betrifft ein Verfahren zum optischen Abtasten eines Objektes gemäß dem Oberbegriff des Patentanspruchs 1 sowie Vorrichtungen zur Durchführung des Verfahrens.

**Stand der Technik:**

Um Objekte und deren Oberflächen optisch zu erkennen oder zu messen, sind lineare und mechanische Lichtablenker mit Winkelablenkung bekannt. Eine Relativbewegung zwischen dem Licht und der abzutastenden Oberfläche ist zwingend erforderlich, wenn in der x-y-Ebene eine Wirkung oder eine Veränderung wahrgenommen werden soll. Bei der berührungsaktiven oder quasi berührungsaktiven Objektabtastung kann ein Lichtleiter gleichermaßen die Lichtleitung zum Objekt und die Empfangsleitung zum Sensor übernehmen, wie auch die Funktion der Bildpunktdefinition. Besonders in Verbindung mit flexiblen Lichtleitfasern wird der Anwendungsbereich angepaßter Erkennungssysteme um ein variantenreiches Abtastprinzip erweitert, z.B. bei der Erkennung von Strichcodes oder beim Einsatz in der optischen Zeichenerkennung in sogenannten OCR-Leseeinrichtungen (optical character recognition).

Eine Objektberührung oder Quasi-Berührung mittels eines festen Lichtleiters ist jedoch in vielen Anwendungsbereichen nicht möglich. In kritischer Umgebung, z.B. durch hohe Temperatur, Feuchtigkeit oder durch aggressive Medien, wie Staub, Rauch, Dampf, Störlicht oder Radioaktivität oder bei störenden Oberflächenbelägen hervorgerufen durch Flüssigkeit, Staub, Schaum oder anderes, ist der Einsatz von festen Lichtleitern nicht möglich. Ebenso scheidet die Anwendung fester Lichtleiter aus bei der optischen Objektabtastung von Objekten mit kritischer Konsistenz oder Geometrie wie pulvrige oder körnige Produkte, Produkte mit faseriger Oberflächenstruktur, bei sekretierenden organischen Substanzen oder auch bei mit Schwebstoffen angereicherten Flüssigkeiten. Durch die DE—OS 15 98 004 ist ein optischer Sondenkopf zum Ansetzen eines Lichtkabels an ein Objekt bekanntgeworden, bestehend aus einer durchsichtigen, ballonartigen und flexiblen Membran, die mit einer lichtleitenden Flüssigkeit gefüllt ist, die über ein Reservoir und eine Zuleitung zur Aufrechterhaltung eines bestimmten statischen Druckes in den Ballon nachgefüllt werden kann. In den Ballon mündet abgedichtet ein Bündel von Lichtleitfasern, deren Enden innerhalb der Flüssigkeit vor der Membran enden. Licht kann über die Lichtleitfasern durch die Flüssigkeit und durch die Membran auf ein Objekt geworfen, reflektiert und durch die Membran, die Flüssigkeit und die Lichtleitfasern zurück auf eine Empfangsstation geleitet werden. Mit einer derartigen Vorrichtung ist es jedoch nicht möglich, in der obengenannten kritischen Umgebung eine optische Abtastung durchzuführen.

Durch die US—A—3 843 865 ist eine Vorrichtung zur Materialbearbeitung mittels eines Laserstrahles bekannt geworden mit einer optisch und materialmäßig homogenen Quarzfiber, die mit Abstandshaltern innerhalb eines flexiblen Tubus gehaltert ist. Der Tubus kann zur Durchleitung eines Gases dienen, das am oberen Ende des Tubus eintritt und am unteren Ende des Tubus und der Quarzfiber austritt, um deren Ende oder fokussierende Elemente von Verschmutzungen freizuhalten. Desweiteren kann der Tubus zur Kühlung und Leistungserhöhung mit einer die Quarzfiber umgebenden, zirkulierenden Flüssigkeit gefüllt sein, die einen geringeren Brechungsindex als derjenige der Quarzfiber aufweist und die aus einem Reservoir kalter Flüssigkeit stammen kann.

**Technische Aufgabe:**

Der Erfindung liegt deshalb die Aufgabe zugrunde, ein Verfahren und Vorrichtungen zum optischen Abtasten eines Objektes zu schaffen, das durch eine berührungslose Abtastung oder durch berührungsaktive Abtastung mittels eines festen Lichtleiters nicht abgetastet werden kann, weil sich das Objekt in kritischer Umgebung befindet oder mit störenden Oberflächenbelängen behaftet ist oder eine Konsistenz oder Geometrie aufweist, die eine berührungslose oder berührungsaktive Abtastung mittels eines festen Lichtleiters nicht zuläßt.

**Darstellung der Erfindung:**

Die Lösung dieser Aufgabe besteht erfindungsgemäß in den Merkmalen des Verfahrens nach Patentanspruch 1; Vorrichtungen zur Durchführung des Verfahrens sind in den Patentansprüchen 3 und 13 gekennzeichnet. Weitere vorteilhafte Ausgestaltungen der Erfindung sind in den übrigen Unteransprüchen enthalten.

Die Erfindung besitzt den hervorragenden Vorteil, daß mit dieser eine optische Objektabtastung auch bei den Applikationen möglich ist, bei denen bisher eine berührungslose Abtastung nur mit Licht oder eine berührungsaktive Abtastung mittels eines festen Lichtleiters nicht möglich ist. Denn der "Witz" der Erfindung besteht darin, daß als Lichtleiter die Kombination eines festen Lichtleiters mit einem flüssigen Lichtleiter in Form eines Flüssigkeitsstrahls dient, in den das Senderlichtbündel bzw. der Senderlichtstrahl in einer Koppelstation eingekoppelt und gemeinsam mit dem Flüssigkeitsstrahl auf die Oberfläche des abzutastenden Objektes geleitet wird, wobei nach dem Auftreffen des Flüssigkeitsstrahls im Auftreffpunkt das Senderlicht mindestens zum Teil reflektiert und innerhalb des Flüssigkeitsstrahls entgegen der Fließrichtung zurückgeleitet und aus dem Flüssigkeitsstrahl ausgekoppelt wird. Innerhalb der Koppelstation wird vorteilhaft der Brechungsindex der Flüssigkeit berücksichtigt, z.B. durch eine entsprechende Wahl und Ausgestaltung einer fokusierenden Optik als Koppelstation. Diese Art und Weise der Objektabtastung ist somit eine berührungsaktive Objektabtastung, wobei der abtastende Lichtleiter ein mehr oder weniger feiner Flüssigkeitsstrahl ist, dessen Flüssigkeit regeneriert wird oder verloren gehen kann.

Mittels des Flüssigkeitsstrahls als Lichtleiter kann die berührungsaktive Objektabtastung in kritischer Umgebung erfolgen, z.B. bei hoher Temperatur, Feuchtigkeit, bei aggressiven Medien, wie Staub, Rauch, Dampf oder Störlicht oder auch bei Vorhandensein von Radioaktivität. Die Erfindung ist insbesondere prädestiniert zur optischen Objektabtastung von Objekten mit störenden Oberflächenbelägen, die mittels eines Flüssigkeitsstrahls eine Zeitlang oder dauernd entfernt werden können; z.B. werden durch den Auftreffdruck des Flüssigkeitsstrahls von der Oberfläche des Objektes dort befindliche Flüssigkeit, Staub oder Schaum weggewaschen. Gleichermaßen ist mit der Erfindung die Abtastung von Objekten mit kritischer Konsistenz oder Geometrie möglich, z.B. die Abtastung von pulvrigem oder körnigem Material oder Schüttgütern, von Objekten mit faseriger Oberstruktur, von sekretierenden organischen Substanzen oder von Flüssigkeiten mit Schwebstoffen.

In vorteilhafter Weise bestimmt der Flüssigkeitsstrahl Größe und Lage des Abtastpunktes auf dem Objekt, wobei sichergestellt sein muß, daß die eingesetzte Flüssigkeit bezüglich der Wellenlänge des verwendeten Lichtes lichtleitend ist. Der flüssige Lichtleiter kann somit zugleich als Lichtleiter zum Objekt und als Rückleiter des reflektierten Lichtes zur Signalverarbeitung dienen.

Prinzipiell ist es möglich, das Senderlicht außerhalb des Flüssigkeitsstrahls auf den Auftreffpunkt desselben auf dem Objekt zu richten und nur innerhalb des Auftreffpunktes reflektiertes Licht in den Flüssigkeitsstrahl zur Rückleitung einzukoppeln.

Kurzbeschreibung der Zeichnung:

Beispiele der Erfindung sind in der Zeichnung dargestellt und anschließend beschrieben, die folgende Darstellungen zeigt:

Figur 1    eine schematische Darstellung einer Vorrichtung zur Durchführung des erfindungsgemäßen Verfahrens, wobei zwischen dem Tastkopf und der Lichtquelle feste Lichtleiter, z.B. flexible Lichtleitfasern, angeordnet sind,

Figur 2a    eine prinzipielle Ausgestaltung der Vorrichtung, bestehend aus Tastkopf, Fördersystem, Lichtquelle und Sensor, die beide jeweils mittels eines festen Lichtleiters mit dem Tastkopf verbunden sind,

Figur 2b    eine Ausführung der Vorrichtung nach Figur 2a, wobei der feste Lichtleiter zur Hin- und Rückleitung des Lichtes vom Tastkopf dient,

Figur 2c    eine Vorrichtung gemäß Figur 2a, wobei die Lichtquelle und der Sensor innerhalb des Tastkopfes angeordnet sind,

Figur 3    eine Vorrichtung mit einem doppelten Tastkopf, die je einen Flüssigkeitsstrahl erzeugen, wobei der eine zur Hinleitung des gesendeten Lichtbündels, der andere zur Rückleitung des reflektierten Lichtbündels dient, wobei die Versorgung der Tastköpfe derjenigen in Figur 2a entspricht,

Figur 4    eine Vorrichtung zur Erzeugung eines Flüssigkeitsstrahls, wobei das Senderlicht von außerhalb des Flüssigkeitsstrahls auf den Auftreffpunkt gerichtet wird und nur reflektiertes Licht innerhalb des Flüssigkeitsstrahls zurückgeleitet wird,

Figur 5    eine Vorrichtung mit einem Vielfach-Tastkopf zur Erzeugung einer Mehrzahl von Flüssigkeitsstrahlen, denen jeweils je eine Lichtquelle, ein Sensorfeld und eine Versorgungsleitung aus einem gemeinsamen Fördersystem zugeordnet sind,

Figur 6    ein technisches Ausführungsbeispiel einer Vorrichtung gemäß der Figur 1,

Figur 7    eine Draufsicht auf die Endfläche des gemeinsamen Faserbündels der Sender- und Empfängerfasern innerhalb des Tastkopfes nach Figur 6,

Figur 8    die Ausgestaltung eines Tastkopfes als Röhrchen zur Inspektion des Inneren von Objekten,

Figur 9    die Ausgestaltung eines Tastkopfes als flexibler Schlauch zur Inspektion des Inneren von Hohlräumen, wie z.B. Rohren und

Figur 10    die Ablenkung des Flüssigkeitsstrahls mit einer elektrischen oder mechanischen Ablenkeinrichtung, um die Relativbewegung zwischen Abtastpunktpunkt und Objekt mittels gesteuerter Bewegung nur des Flüssigkeitsstrahls über das Objekt hinweg zu erzeugen.

Wege zur Ausführung der Erfindung:

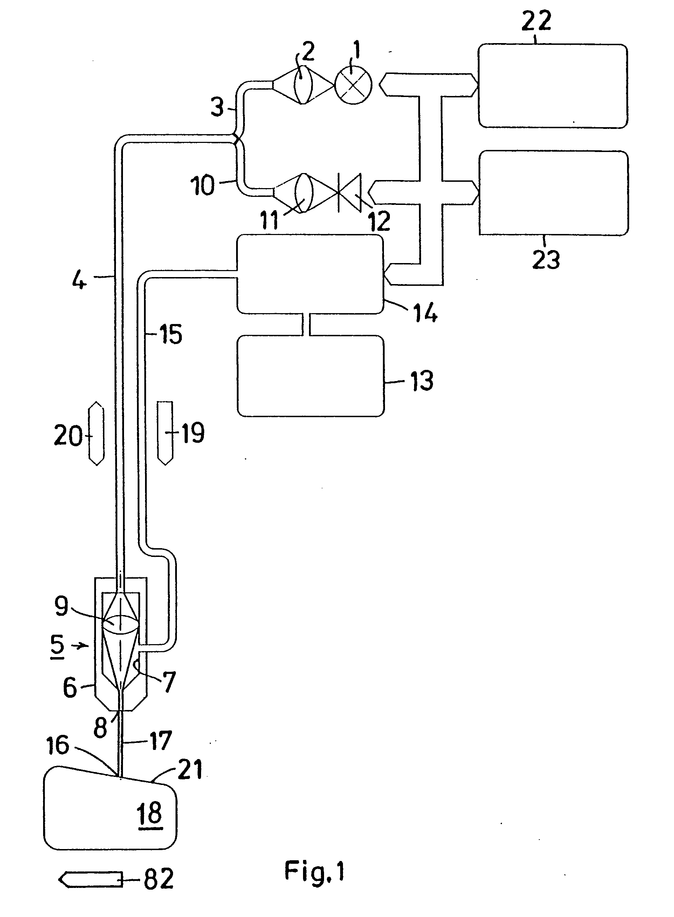

Figur 1 zeigt eine prinzipielle Ausgestaltung einer Vorrichtung zum optischen Abtasten eines Objektes mittels eines erzeugten Flüssigkeitsstrahls aus einer lichtleitenden Flüssigkeit, wobei der Flüssigkeitsstrahl in folgenden als Taststrahl bezeichnet wird. Eine Lichtquelle 1, die eine Laserlichtquelle sein kann, erzeugt ein Lichtbündel, das mittels einer Optik fokussiert und auf einen festen Lichtleiter 3 aufgegeben wird. Dabei wird unter dem Begriff "Optik" allgemein ein zweckmäßig angeordnetes und ausgestaltetes Bauelement verstanden, das geeignet ist, eine optische Wirkung, wie Abbildung, Vergrößerung oder Fokussierung u.ä., zu erzielen. Unter "Lichtleiter" werden insbesondere feste Lichtleitfasern, entweder als Senderfasern oder als Empfängerfasern, verstanden. Unter "Düse" wird eine Einrichtung verstanden, die sowohl mechanisch als auch elektrisch oder magnetisch einen Flüssigkeitsstrahl erzeugen vermag.

Die Senderfaser 3 ist innerhalb eines flexiblen Kabels 4 zu einem Tastkopf 5 geführt, der z.B. aus einem zylindrischen Gehäuse 6 besteht, welches einen Hohlraum 7 umschließt. Das Gehäuse 6 weist an seinem unteren Ende eine feine Öffnung 8 auf, wobei diese Öffnung z.B. eine Düse ist. Innerhalb des Hohlraumes 7 des Tastkopfes 5 ist in dessen oberen Bereich eine Optik 9 angeordnet. Innerhalb des Kabels 4 ist gleichermaßen mindestens eine Empfängerfaser 10 geführt, die, wie die Senderfaser 3, innerhalb des Tastkopfes 5 und oberhalb der Optik 9 endet. Das andere Ende der Empfängerfaser 10 ist gegenüber einer Optik 11 angeordnet, die gegenüber einem opto-elektrischen Sensor 12 angeordnet ist, der z.B. eine Diode sein kann.

Innerhalb eines Behälters 13 ist eine Flüssigkeit angeordnet, die vorzugsweise bezüglich der Wellenlänge des verwendeten Lichtes lichtleitend ist. Ein Fördersystem 14 für die Flüssigkeit ist mittels einer Flüssigkeitsleitung 15 mit dem Tastkopf 5 verbunden, wobei der Flüssigkeitsleitung 15 in den Hohlraum 7 des Gehäuses 6 einmündet Mittels des Fördersystems 14 kann die Flüssigkeit in den Hohlraum 7 des Tastkopfes 5 gefördert werden. Das Fördersystem kann allgemein eine Förderpumpe oder Dosierpumpe, Ventile, Druckregelung und Filter umfassen. Die Versorgung des Tastkopfes mit der lichtleitenden Flüssigkeit kann aus einem Netz oder einem Tank entnommen werden oder aus dem das Objekt umgebende Flüssigkeitsmilieu stammen. Mittels des Fördersystems 14 und der Düse 8 wird aus der Flüssigkeit ein Taststrahl 17 gebildet, der auf ein Objekt 18 gerichtet wird und dort auf der Oberfläche 21 des Objektes in einem Auftreffpunkt 16 auftrifft. Eine Systemversorgung 22 dient sowohl zur Versorgung der Lichtquelle 1 als auch der Sensorik 12 und des Fördersystems 14. Die aus der Sensorik 12 stammenden Signale werden innerhalb einer Signalverarbeitungseinrichtung 23 verarbeitet und z.B. mit einem Referenzsignal verglichen.

Die Funktion der Vorrichtung ist folgende:

Mittels des Fördersystems 14 wird aus dem Behälter 13 lichtleitende Flüssigkeit in den Hohlraum 7 des Tastkopfes 5 geführt und dort durch Erzeugung eines Druckes nach außen durch die Düse 8 in Form des feinen Taststrahls 17 gepreßt. Dieser Taststrahl bleibt während der gesamten Zeit der Abtastung aufrecht erhalten. Gleichzeitig wird mittels der Lichtquelle 1 ein Lichtbündel erzeugt und nach Fokussierung auf die Senderfaser 3 über die Optik 9 in das Flüssigkeitsvolumen innerhalb des Hohlraumes 7 eingeleitet. Das Senderlicht wird dabei durch die Optik 9 derart fokussiert, daß es direkt mit dem Taststrahl 17 durch die Düse 8 nach außen geführt wird. Der Taststrahl 17 dient dabei als ein weiterer, flüssiger Lichtleiter, wobei auch innerhalb des Taststrahls 17 das Licht entsprechend den optischen Gesetzen an der Grenzfläche Flüssigkeit/Luft reflektiert und innerhalb des Taststrahls 17 nach unten auf den Auftreffpunkt 16 auf dem Objekt 18 geleitet wird.

Im Auftreffpunkt 16 wird das Senderlicht mindestens zum Teil reflektiert und innerhalb des Taststrahls 17 zurückgeleitet, so daß der Taststrahl in diesem Falle gleichzeitig zur Hin- und Rückleitung des Lichtes dient. Über die Optik 9 wird das reflektierte Licht aus der Flüssigkeit ausgekoppelt und auf die Empfängerfaser 10 aufgegeben und fällt danach über die Optik 11 auf den Sensor 12, dessen elektrische Ausgangssignale innerhalb der Signalverarbeitungseinrichtung 23 aufbereitet werden. Bei Bewegen des Objektes 18 in Richtung des Bewegungspfeils 82, in Figur 1 nach links, wird die Oberfläche 21 des Objektes 18 entsprechend der Bewegung im Auftreffpunkt 16 abgetastet.

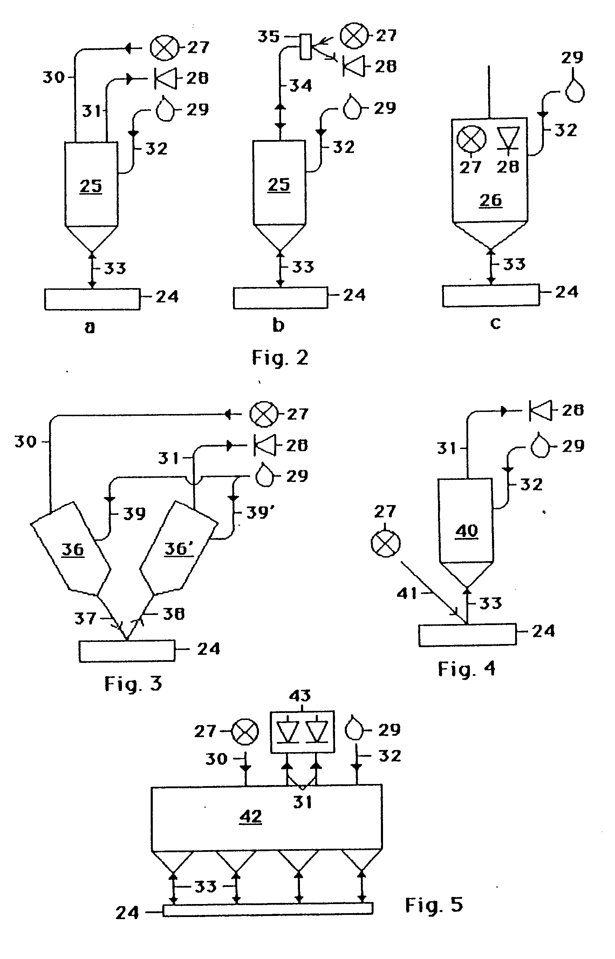

In den Figuren 2 bis 5 sind prinzipielle Ausgestaltungen der Vorrichtung gezeigt, die ähnlich der Vorrichtung der Figur 1 ausgestaltet sind. Figur 2a zeigt einen Tastkopf 25, dem über eine Flüssigkeitszuleitung 32 Flüssigkeit 29 zugeführt wird, die innerhalb des Tastkopfes 25 zu einem auf ein Objekt 24 gerichteten Taststrahl 33 umgeformt wird. Eine Lichtquelle 27 ist über einen Lichtleiter 30, ein Sensor 28 über einen Lichtleiter 31 mit dem Tastkopf verbunden.

Figur 2b zeigt eine Ausgestaltung, bei der ein Lichtleiter 34 sowohl zur Hin- als auch zur Rückleitung des Lichtes dient, wobei das reflektierte Licht mittels einer Ablenkeinrichtung 35 ausgelenkt und auf den Sensor 28 gegeben wird. Figur 2c zeigt eine weitere prinzipielle Ausgestaltungsmöglichkeit, bei der innerhalb eines Tastkopfes 26 die Lichtquelle 27 und der Sensor 28 angeordnet sind. Wie in den Figuren 2a und 2b wird der Tastkopf 26 über eine Flüssigkeitszuleitung 32 mittels der Tastflüssigkeit 29 aus einem Fördersystem versorgt.

Figur 3 zeigt eine Vorrichtung, die zwei nebeneinander angeordnete Tastköpfe 36 und 36' aufweist, die jeder für sich über Flüssigkeitszuleitungen 39, 39' mittels der Tastflüssigkeit 29 versorgt werden. Jeder Tastkopf 36, 36' erzeugt einen Taststrahl 37, 38, wobei beide Taststrahlen auf einen gemeinsamen Auftreffpunkt auf dem Objekt 24 gerichtet sind. Das Licht wird in den Taststrahl 37 eingekoppelt, reflektiertes Licht wird hingegen in den zweiten Taststrahl 38 eingekoppelt und zurückgeleitet.

Figur 4 zeigt eine Vorrichtung, bei der in einen Tastkopf 40 nur die Flüssigkeitszuleitung 32 und die Empfängerlichtleitung 31 geführt sind. Ein Lichtbündel 41 wird außerhalb des Taststrahls 33 direkt auf den Auftreffpunkt des Taststrahls 33 auf das Objekt 24 gerichtet und erst das reflektierte Licht wird innerhalb des Auftreffpunktes in den Taststrahl 33 eingekoppelt und über den Tastkopf 40 zum Sensor 28 geleitet.

Figur 5 zeigt eine Vorrichtung mit einem Mehrfachtastkopf 42, der eine Mehrzahl von Taststrahlen 33 erzeugt. Jedem Taststrahl ist aus der Lichtquelle 27 gesendetes Licht einkoppelbar, wobei die Rückführung des reflektierten Lichtes gemäß der Figuren 1 oder 2 geschieht. Sämtliche rückführenden Empfängerleitungen sind auf ein Sensorfeld 43 gegeben zur weiteren geeigneten Verarbeitung. Die Flüssigkeitszuleitung 32 zur Zuführung der Tastflüssigkeit 29 aus einem Fördersystem dient zur gleichzeitigen Herstellung der Mehrzahl der Taststrahlen.

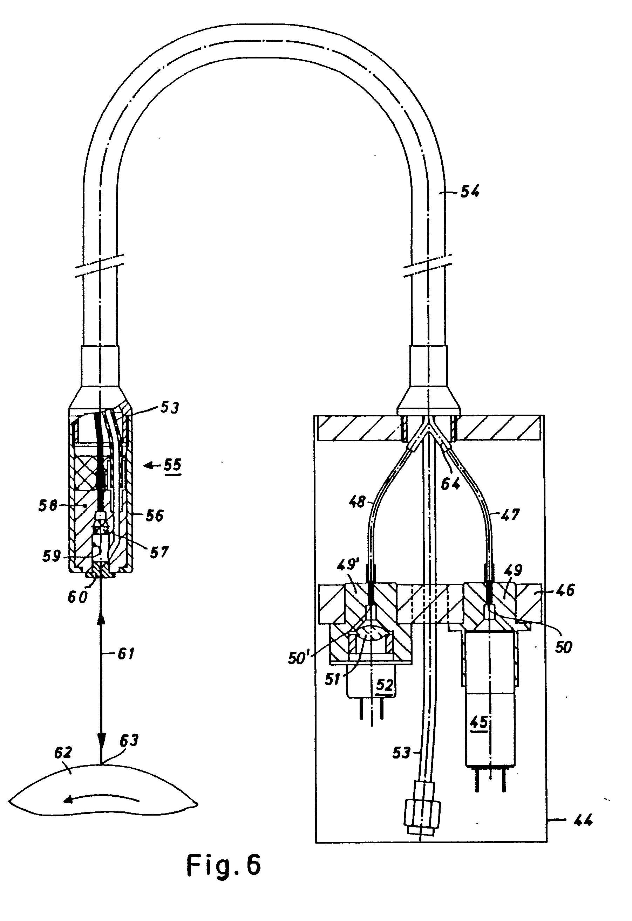

Figur 6 zeigt eine technische Ausgestaltung der erfindungsgemäßen Vorrichtung. Innerhalb eines Detektorgehäuses 44 ist geeignet eine Platte 46 angeordnet, in oder auf der geeignet eine Halterung 49 befestigt ist. Die Halterung 49 trägt auf der einen Seite der Platte 46 einen Diodenlaser mit Einkopplungsoptik 45. Auf der gegenüberliegenden Seite ist in die Halterung 49 mindestens eine Senderfaser 47 geführt und dort gehalten. Gleichermaßen ist in oder auf der Platte 46 eine weitere Halterung 49' angeordnet, wobei auf der einen Seite dieser Halterung 49' ein opto-elektrischer Sensor 52 angeordnet ist. In die gegenüberliegende Seite der Halterung mündet mindestens eine Empfängerfaser 48, wobei zwischen dem Ende der Empfängerfaser 48 und dem Sensor 52 eine Optik 51 angeordnet sein kann. Die Sender- und Empfängerfasern 47, 48 wie eine Flüssigkeitszuleitung 53 sind innerhalb eines flexiblen Kabels 54 zu einem Tastkopf 55 geführt.

Der Tastkopf 55 besteht aus einem länglichen Gehäuse 56, das vorzugsweise zylindrisch ist und in das ein Kernstück 58 angeordnet ist. Das Kernstück 58 weist einen Hohlraum 59, z.B. eine Bohrung, auf, in die die Flüssigkeitszuleitung 53 einmündet. Am oberen Ende des Hohlraumes 59 befindet sich eine Optik 57, wobei die sendenden und empfangenden Lichtleiter 47, 48 mit ihren stirnseitigen Begrenzungsflächen der Optik 57 benachbart sind; die Enden der Lichtleiter 47, 48 sind dazu geeignet innerhalb des Kernstuckes 58 gehalten. Das untere Ende des Hohlraumes 59 ist mittels einer Düse 60 verschlossen. Bei Einleitung der Tastflüssigkeit in den Hohlraum 59 mittels Druck wird aus der Tastflüssigkeit durch die Düse 60 ein feiner Taststrahl 61 geformt, der im Abtastpunkt 63 auf ein Objekt 62 auftritt. Wird gleichzeitig über den Diodenlaser 45 Licht über die Senderfaser 47 geleitet, so koppelt die Optik 57 das gesendete Licht in den Taststrahl 61 ein. Die Rückleitung des reflektierten Lichtes und die Auswertung desselben geschieht wie zu Figur 1 beschrieben.

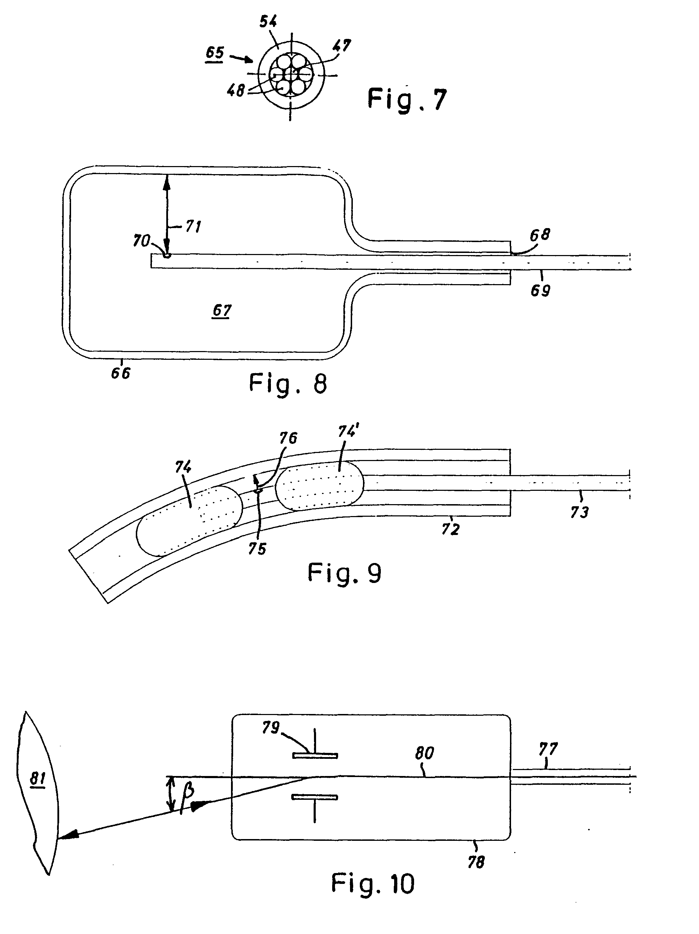

Figur 7 zeigt in Draufsicht die Endfläche 65 des aus den Sender- und Empfängerfasern 47, 48 gebildeten Faserbündels oberhalb der Optik 57 in Figur 6. Als Senderfaser dient hier der einzige Lichtleiter 47, der von einer Mehrzahl von Empfängerfasern 48 kreisförmig umgeben ist. Die Figuren 8 bis 10 zeigen verschiedene produktangepaßte Beispiele der Vorrichtung. In Figur 8 besteht der Tastkopf aus einem Taströhrchen 69, das an seinem unteren Ende verschlossen ist, wobei peripher am Umfang des Taströhrchens eine Düse 70 zum Austritt eines Taststrahls 71 angeordnet ist. Das Taströhrchen 69 ist in einen Körper 66 eingeführt, der einen Hohlraum 67 zum Abtasten der inneren Wandung aufweist. Wird beim Abtastvorgang das Taströhrchen 69 gedreht und dabei langsam in das Innere des Hohlraumes 67 vorgeschoben, so kann dadurch die gesamte innere Wandung z.B. spiralig abgebildet werden.

Figur 9 zeigt die Ausgestaltung des Tastkopfes als flexiblen Tastschlauch 73, der an seinem vorderen Ende zwei in Abstand angeordnete Führungskörper 74, 74' aufweist, die zur Führung des Tastschlauches 73 innerhalb eines länglichen Hohlkörpers 72 dienen, der ein gekrümmtes Rohr sein kann. Der Tastschlauch 73 ist an seinem unteren Ende verschlossen, wobei dessen Umfangswandung zwischen den beiden Führungskörpern 74, 74' peripher eine Düse 75 aufweist zur Erzeugung eines Taststrahls 76. Beim Einschieben des Tastschlauches 73 in den Hohlkörper 72 kann dessen Innenwandung längs der vom Taststrahl 76 überfahrenen Linie abgetastet werden.

Figur 10 zeigt einen Tastkopf 77, der mit seinem unteren Ende in eine Kammer 78 mündet, in der eine Ablenkeinrichtung 79 angeordnet ist. Diese Ablenkleinrichtung 79 dient zum Ablenken des Taststrahls 80, der somit unter einem Ablenkwinkel ß auf ein Objekt 81 gerichtet wird, bezogen auf die Austrittsrichtung des Taststrahls 80 aus dem Tastkopf 77. Die Ablenkeinrichtung 79, durch die der Taststrahl 80 hindurchläuft, kann eine elektrisch oder mechanisch arbeitende sein. Arbeitet die Ablenkeinrichtung 79 elektrisch, so muß die verwendete Tastflüssigkeit nicht nur lichtleitend, sondern auch elektrisch ablenkbar sein. Auf diese Weise kann durch Steuerung der Ablenkeinrichtung 79 der Taststrahl 80 in vorgenannter Weise über das Objekt 81 geführt werden, so daß hier zur Informationsgewinnung keine Relativbewegung zwischen dem Objekt selbst und dem Tastkopf vorhanden zu sein braucht.

Gewerbliche Anwendbarkeit:

Die Erfindung ist prädestiniert zur optischen Objektabtastung von Objekten mit störenden Oberflächenbelägen, die mittels eines Flüssigkeitsstrahls eine Zeitlang oder dauernd entfernt werden können. Gleichermaßen ist mit der Erfindung die Abtastung von Objekten mit kritischer Konsistenz oder Geometrie möglich, z.B. die Abtastung von pulvrigem oder körnigem Material oder Schüttgütern, von Objekten mit faseriger Oberstruktur, von sekretierenden organischen Substanzen oder von Flüssigkeiten mit Schwebstoffen.

Ebenso ist die Erfindung zur lokalen Inspektion von radioaktiven Bauteilen geeignet, die sich im nassen Milieu innerhalb eines Strahlenschutzbereiches befinden. Dabei lassen sich die lokale Oberflächenbeschaffenheit und die Temperatur erkennen. Ebenso kann die Erfindung bei der Naßbehandlung von reprotechnischen Materialien eingesetzt werden, die sich in einem Milieu wie Nässe, Lauge, Schaum oder in einer abgekapselten Bearbeitungslinie befinden, wobei als Erkennungskriterien densitometrische Größen detektiert werden.

Gleichermaßen läßt sich die Erfindung bei der chemischen Behandlung von textilen Stoffen in einer Bearbeitungslinie einsetzen, wobei hier das Milieu aus Nässe, Dampf, Lauge oder Schaumblasen bestehen kann. Als Erkennungskriterien werden die Stoffdehnung an verschiedenen Orten der Behandlungsstrecke über der Bahnbreite oder die Farbe oder sonstige Fehler, Farbfehler oder Webfehler, detektiert.

Insbesondere kann die Erfindung überall dort vorteilhaft eingesetzt werden, wo eine Kühlemulsion, die mit feinkörnigen Materialresten, wie Metallreste, angereichert ist, den unmittelbaren Bearbeitungsort des Objektes bedeckt und abdeckt, wie das bei der spanabhebenden Bearbeitung von Objekten in weiten Bereichen der Technik der Fall ist. Hier können Risse, Abplatzungen oder sonstwie fehlerhafte Materialbearbeitungen direkt am Ort des Eingriffs der spanabhebenden Werkzeugs beobachtet und detektiert werden, indem die Kühlemulsion durch den Flüssigkeitsstrahl weggedrückt und der Bearbeitungspunkt dadurch freigelegt wird.

Des weiteren ist die Erfindung vorteilhaft bei der Kettfadenschlichtung in einer Bearbeitungslinie beim Quetschen der Fadenlage mittels Kalander einsetzbar, wobei das Milieu Dampf, Nässe oder gelöste Substanzen sein können und als Erkennungskriterien ein gerissener Einzelfaden detektiert wird, der den Kalander umwickelt.

Liste der Bezugszeichen:

| 1 | Lichtquelle |
|---|---|
| 2 | Optik |
| 3 | Lichtleiter (Senderfaser) |
| 4 | Flexibles kabel |
| 5 | Tastkopf |
| 6 | Gehäuse |
| 7 | Hohlraum |
| 8 | Düse |
| 9 | Optik |
| 10 | Lichtleiter (Empfängerfaser) |
| 11 | Optik |
| 12 | Sensor |
| 13 | Behälter |
| 14 | Fördersystem (Pumpe) |
| 15 | Flüssigkeitsleitung |
| 16 | Auftreffpunkt |
| 17 | Flüssigkeitsstrahl (Taststrahl) |
| 18 | Objekt |
| 19, 20 | Richtungspfeile |
| 21 | Oberfläche dses Objektes |
| 22 | Systemversorgung |
| 23 | Signalverarbeitungseinrichtung |
| 24 | Objekt |
| 25, 26 | Tastköpfe |
| 27 | Lichtquelle |
| 28 | Sensor |
| 29 | Tastflüssigkeit |
| 30 | Senderlichtleitung |
| 31 | Empfängerlichtleitung |
| 32 | Flüssigkeitszuleitung |
| 33 | Taststrahl |
| 34 | Gemeinsame Lichtleitung in beiden Richtungen |
| 35 | Ablenkeinrichtung |
| 36, 36' | Tastköpfe |
| 37, 38 | Taststrahlen |
| 39, 39' | Flüssigkeitszuleitungen |
| 40 | Tastkopf |
| 41 | Lichtstrahl |
| 42 | Tastkopf |
| 43 | Sensorfeld |
| 44 | Detektorgehäuse |
| 45 | Diodenlaser |
| 46 | Platte |
| 47 | Senderfasern |
| 48 | Empfängerfaser |
| 49, 49' | Halterung |
| 50, 50' | Ende der Fasern |
| 51 | Optik |
| 52 | Sensor |
| 53 | Flüssigkeitszuleitung |
| 54 | Flexibles Kabel |
| 55 | Tastkopf |
| 56 | Gehäuse |
| 57 | Optik |
| 58 | Kernstück |
| 59 | Bohrung |
| 60 | Düse |
| 61 | Flüssigkeitsstrahl |
| 62 | Objekt |
| 63 | Abtastpunkt |
| 64 | T-Stück |
| 65 | Endfläche des Faserbündels der Sender- und Empfängerfasern |
| 66 | Körper |
| 67 | Hohlraum |
| 68 | Öffnung |
| 69 | Taströhrchen |
| 70 | Düse |
| 71 | Flüssigkeitsstrahl |
| 72 | Länglicher Hohlkörper |
| 73 | Flexibler Tastschlauch |
| 74, 74' | Führungskörper |
| 75 | Düse |
| 76 | Flüssigkeitsstrahl |
| 77 | Tastschlauch |
| 78 | Kammer |
| 79 | Ablenkeinrichtung |
| 80 | Flüssigkeitsstrahl |
| 81 | Objekt |

**Patentansprüche**

1. Verfahren zum optischen Abtasten eines Objektes mittels eines feinen Lichtbündels, das gegenüber dem Objekt relativ bewegt und in eine lichtleitende Flüssigkeit eingeleitet wird, die über dem Ort der Abtastung des Objekts sich befindet, wobei die Flüssigkeit das Licht auf den Ort der Abtastung hin und das vom Objekt reflektierte Licht zurück auf eine opto-elektrische Sensor- und Auswerteeinrichtung leitet, dadurch gekennzeichnet, daß auf die Flüssigkeit ein hydrodynamischer Druck oder eine Beschleunigung ausgeübt und dadurch ein Flüssigkeitsstrahl (17, 33, 37, 38, 61, 71, 76, 80) erzeugt wird, der auf das abzutastende Objekt (18, 24, 62, 66, 72, 81) gerichtet wird und dasselbe im Ort der Abtastung (16, 63) bespült, wobei das Licht in den Flüssigkeitsstrahl eingekoppelt und innerhalb desselben auf den Auftreffpunkt (16, 63) des Flüssigkeitsstrahls auf das Objekt geleitet, danach das reflektierte Licht innerhalb des Flüssigkeitsstrahls zurückgeleitet, aus demselben ausgekoppelt und auf die Sensor- und Auswerteeinrichtung (12, 22; 28; 43; 52) aufgegeben wird.

2. Verfahren nach Anspruch 1, dadurch gekennzeichnet, daß das Senderlicht (41) unter einem Winkel größer Null von außerhalb des Flüssigkeitsstrahls (33) in den Auftreffpunkt auf das Objekt (24) gerichtet und das reflektierte Licht im Auftreffpunkt in den Flüssigkeitsstrahl eingekoppelt und derselbe zur Rückleitung des reflektierten Lichtes benützt wird.

3. Vorrichtung zum optischen Abtasten eines Objektes mittels eines feinen Lichtbündels, das gegenüber dem Objekt relativ bewegbar und in eine lichtleitende Flüssigkeit einleitbar ist, mit einer opto-elektrischen Sensor- und Auswerteeinrichtung zum Auswerten des reflektierten Lichts, gekennzeichnet durch a) einen Tastkopf (5, 25, 26, 36, 36', 40, 42, 55, 69, 73, 77), der eine Düse (8, 60, 70, 75) aufweist und der dem Objekt (18, 24, 62, 66, 72, 81) benachbart ist b) ein Fördersystem (14), welches aus einem Behälter (13) dem Tastkopf (5, 25, 26, 36, 36', 40, 42, 55, 69, 73, 77) die lichtleitende Flüssigkeit zuführt c) auf die Flüssigkeit wird ein Druck oder eine Beschleunigung ausgeübt und mittels der Düse (8, 60, 70, 75) in einen Flüssigkeitsstrahl (17, 33, 37, 38, 61, 71, 76, 80) geformt und auf das Objekt (18, 24, 62, 66, 72, 81) gerichtet d) eine Einrichtung (9, 57) innerhalb des Tastkopfes zum Einkoppeln des gesendeten Lichts in den Flüssigkeitsstrahl hinein und Auskoppeln des reflektierten Lichts aus dem Flüssigkeitsstrahl heraus, um das reflektierte Licht auf die Sensor- und Auswerteeinrichtung (12, 33; 28; 43; 52) aufzugeben.

4. Vorrichtung nach Anspruch 3, dadurch gekennzeichnet, daß der Tastkopf (5, 55) einen Hohlraum (7, 59) aufweist, in den, ausgehend vom Fördersystem (14), eine Zuführleitung (15, 53) für die Flüssigkeit mündet, wobei oberhalb der Düse (8, 60, 70, 75) die Einrichtung (9, 57) zum Einkoppeln und Auskoppeln des Lichts angeordnet ist, die eine Optik ist.

5. Vorrichtung nach Anspruch 4, dadurch gekennzeichnet, daß die Lichtquelle (27) zur Erzeugung des Senderlichtes und/oder die Sensoreinrichtung (28) zum Empfang des reflektierten Lichtes innerhalb des Tastkopfes (26) angeordnet sind.

6. Vorrichtung nach Anspruch 3, dadurch gekennzeichnet, daß der Tastkopf (36, 36'; 42) eine Mehrzahl von Düsen zur Erzeugung einer Mehrzahl von Flüssigkeitsstrahlen (33, 37, 38) aufweist, denen je eine Lichtquelle (27), eine Einrichtung zum Einkoppeln bzw. Auskoppeln des Lichts, und eine Sensor- und Auswerteeinrichtung (28, 43) zugeordnet sind.

7. Vorrichtung nach Anspruch 6, dadurch gekennzeichnet, daß zwei Flüssigkeitsstrahlen (37, 28) auf denselben Abtastpunkt des Objektes (24) gerichtet und das gesendete und reflektierte Licht in den verschiedenen Flüssigkeitsstrahlen geleitet sind.

8. Vorrichtung nach Anspruch 3 oder 4 oder 5 oder 6 oder 7, gekennzeichnet durch mindestens je eine sendende und je eine empfangende Lichtleitfaser (3, 30, 34, 47; 10, 31, 34, 48), die zwischen der Lichtquelle (1, 27, 45) bzw. der Sensor- und Auswerteeinrichtung (11, 23; 28; 43; 52) und dem Tastkopf (5, 26, 36, 36', 40, 42, 55, 69, 73, 77) angeordnet und in denselben geführt sind und oberhalb der Einrichtung (9, 57) zum Einkoppeln und Auskoppeln enden.

9. Vorrichtung nach Anspruch 3, dadurch gekennzeichnet, daß der Tastkopf aus einem Röhrchen (69, 73) besteht, in das die Flüssigkeit eingeleitet und das an seinem unteren Ende verschlossen ist, wobei die Düse (70, 75) peripher am Umfang des Röhrchens angeordnet ist.

10. Vorrichtung nach Anspruch 3, gekennzeichnet durch eine elektrisch oder mechanisch arbeitende Ablenkeinrichtung (79) für den Flüssigkeitsstrahl (80), die nach dem Tastkopf (77) angeordnet ist und durch die der Flüssigkeitsstrahl (80) zu seiner steuerbaren Ablenkung hindurchläuft.

11. Vorrichtung nach Anspruch 4, dadurch gekennzeichnet, daß die Optik (9, 57) zum Ein- und/oder Auskoppeln senkrecht oberhalb der Düse (8, 60) des Tastkopfes (5, 55) in Richtung des Flüssigkeitsstrahls (17, 61) und im oberen Bereich des Hohlraumes (7, 59) angeordnet ist.

12. Vorrichtung nach Anspruch 3, dadurch gekennzeichnet, daß das Licht vor seiner Einkopplung in den Flüssigkeitsstrahl und/oder nach seiner Auskopplung in einem festen Lichtleiter zur Sensor- und Auswerteeinrichtung übertragen wird.

13. Vorrichtung zur Durchführung des Verfahrens nach Anspruch 2, mit einer opto-elektrischen Sensor- und Auswerteeinrichtung zum Auswerten des reflektierten Lichts, gekennzeichnet durch a) einen Tastkopf (5, 25, 26, 36, 36', 40, 42, 55, 69, 73, 77), der eine Düse (8, 60, 70, 75) aufweist und der dem Objekt (18, 24, 62, 66, 72, 81) benachbart ist b) ein Fördersystem (14), welches aus einem Behälter (13) dem Tastkopf (5, 25, 26, 36, 36', 40, 42, 55, 69, 73, 77) die lichtleitende Flüssigkeit zuführt c) auf die Flüssigkeit wird ein Druck oder eine Beschleunigung ausgeübt und mittels der Düse (8, 60, 70, 75) in einen Flüssigkeitsstrahl (17, 33, 37, 38, 61, 71, 76, 80) geformt und auf das Objekt (18, 24, 62, 66, 72, 81) gerichtet d) eine Einrichtung (9, 57) innerhalb des Tastkopfes zur Leitung des gesendeten Lichts unter einem Winkel größer Null von außerhalb des Flüssigkeitsstrahls in den Auftreffpunkt auf das Objekt und zur Einkopplung des reflektierten Lichts im Auftreffpunkt in den Flüssigkeitsstrahl, der zur Rückleitung des reflektierten Lichts benützt wird und e) einen festen Lichtleiter, in dem Licht vor dem Auftreffpunkt auf das Objekt und/oder nach seiner Auskopplung aus dem Flüssigkeitsstrahl zur Sensor- und Auswerteeinrichtung übertragen wird.

## Revendications

1. Procédé pour le balayage optique d'un objet au moyen d'un faisceau lumineux fin qui exerce un mouvement relatif par rapport à l'objet et est introduit dans un liquide photoconducteur se trouvant au-dessus du lieu de balayage de l'objet, le liquide transmettant la lumière au point de balayage et retransmettant la lumière reflétée par l'objet à une unité opto-électrique de détection et d'évaluation, caractérisé en ce qu'une pression hydrodynamique ou une accélération est exercée sur le liquide de sorte qu'on obtient un jet de liquide (17, 33, 37, 38, 61, 71, 76, 80) lequel est dirigé sur l'objet à balayer (18, 24, 62, 66, 72, 81) et s'écoule sur ce-dernier au point de balayage (16, 63), la lumière étant couplée dans le jet de liquide et conduite dans celui-ci vers le point d'incidence (16, 63) du jet de liquide sur l'objet, et, ensuite, la lumière reflétée étant reconduite à l'intérieur du jet de liquide, découplée de celui-ci et transmise à l'unité de détection et d'interprétation (12, 22; 28; 43; 52).

2. Procédé selon la revendication 1, caractérisé en ce que la lumière d'émission (41) est dirigée vers le point d'incidence sur l'objet (24) sous un angle supérieur à zéro en dehors du jet de liquide (33) et que, au point d'incidence, la lumière reflétée est couplée dans le jet de liquide qui est utilisé pour retransmettre la lumière reflétée.

3. Dispositif pour le balayage optique d'un objet au moyen d'un faisceau lumineux fin qui peut être mu relativement par rapport à l'objet et envoyé dans un liquide photoconducteur, avec une unité opto-électrique de détection et d'évaluation destinée à l'analyse de la lumière reflétée, caractérisé par a) une tête palpeuse (5, 25, 26, 36, 36', 40, 42, 55, 69, 73, 77) dotée d'une buse (8, 60, 70, 75) et disposée à proximité de l'objet (18, 24, 62, 66, 72, 81), b) un système d'alimentation (14) qui, à partir d'un récipient (13), amène le liquide photoconducteur à la tête palpeuse (5, 25, 26, 36, 36', 40, 42, 55, 69, 73, 77), c) une pession ou une accélération est exercée sur le liquide qui, au moyen de la buse (8, 60, 70, 75) est formé en un jet de liquide (17, 33, 37, 38, 61, 71, 76, 80) et dirigé sur l'objet (18, 24, 62, 66, 72, 81) d) un dispositif (9, 57) à l'intérieur de la tête palpeuse servant à coupler la lumière émise dans le jet de liquide et à découpler la lumière reflétée du jet de liquide pour transmettre cette lumière reflétée à l'unité de détection et d'évaluation (12, 33; 28; 43; 52).

4. Dispositif selon la revendication 3, caractérisé en ce que la tête palpeuse (5, 55) présente une cavité (7, 59) dans laquelle, en partant du système d'alimentation (14), débouche une conduite d'alimentation (15, 53) du liquide, et que le dispositif (9, 57) pour le couplage et le découplage de la lumière, qui est un élément optique, est disposé au-dessus de la buse (8, 60, 70, 75).

5. Dispositif selon la revendication 4, caractérisé en ce que la source lumineuse (27) engendrant la lumière d'émission et/ou l'unite de détection (28) recevant la lumière reflétée sont disposées à l'intérieur de la tête palpeuse (26).

6. Dispositif selon la revendication 3, caractérisé en ce que la tête palpeuse (36, 36'; 42) comprend plusieurs buses destinées à engendrer plusieurs jets de liquide (33, 37, 38), à chacun de ces-derniers étant associé une source lumineuse (27), un dispositif de couplage et de découplage de la lumière et une unité de détection et d'évaluation (28, 43).

7. Dispositif selon la revendication 6, caractérisé en ce que deux jets de liquide (37, 38) sont dirigés sur le méme point de balayage de l'objet (24) et que la lumière émise et celle reflétée sont conduites dans les divers jets de liquide.

8. Dispositif selon l'une quelconque des revendications 3, 4, 5, 6 ou 7, caractérisé en ce qu'il présente au moins une fibre optique d'émission et une fibre optique de réception (3, 30, 34, 47; 10, 31, 34, 48) disposées respectivement entre la source lumineuse (1, 27, 45) et l'unité de détection et d'évaluation (11, 23; 28; 43; 52) et la tête palpeuse (5, 26, 36, 36', 40, 42, 55, 69, 73, 77) et conduites dans cette dernière et qui se terminent au-dessus du dispositif (9, 57) de couplage et de découplage.

9. Dispositif selon la revendication 3, caractérisé en ce que la tête palpeuse consiste en un tube (69, 73), dans lequel est introduit le liquide et dont l'extrémité inférieure est fermée, la buse (70, 75) étant disposée sur la périphérie du tube.

10. Dispositif selon la revendication 3, caractérisé en ce qu' il comprend un dispositif de déviation (79) à fonctionnement électrique ou mécanique pour le jet de liquide (80) qui est disposé en aval de la tête palpeuse (77) et par lequel passe le jet de liquide (80) afin d'être dévié de façon contrôlable.

11. Dispositif selon la revendication 4, caractérisé en ce que l'élément optique (9, 57) pour le couplage et/ou le découplage est disposé perpendiculairement au-dessus de la buse (8, 60) de la tête palpeuse (5, 55) en direction du jet de liquide (17, 61) et dans la partie supérieure de la cavité (7, 59).

12. Dispositif selon la revendication 3, caractérisé en ce que la lumière, avant son couplage dans le jet de liquide et/ou après son découplage de ce-dernier, est transmise à l'unité de détection et d'évaluation dans un conducteur optique solide.

13. Dispositif de mise en oeuvre du procédé selon la revendication 2 comportant une unité opto-électrique de détection et d'évaluation pour l'analyse de la lumière reflétée, caractérisé par a) une tête palpeuse (5, 25, 26, 36, 36', 40, 42, 55, 69, 73, 77) dotée d'une buse (8, 60, 70, 75) et disposée à proximité de l'objet (18, 24, 62, 66, 72, 81), b) un système d'alimentation (14) qui, à partir d'un récipient (13), amène le liquide photoconducteur à la tête palpeuse (5, 25, 26, 36, 36', 40, 42, 55, 69, 73, 77), c) une pression ou une accélération est exercée sur le liquide qui, au moyen de la buse (8, 60, 70, 75) est formé en un jet de liquide (17, 33, 37, 38, 61, 71, 76, 80) et dirigé sur l'objet (18, 24, 62, 66, 72, 81) d) un dispositif (9, 57) à l'intérieur de la tête palpeuse servant à transmetter la lumière émise, sous un angle supérieur à zéro et du dehors du jet de liquide, au point d'incidence sur l'objet, et au couplage de la lumière reflétée au point d'incidence dans le jet de liquide utilisé pour reconduire la lumière reflétée, et e) un conducteur optique solide qui transmet la lumière avant le point d'incidence sur l'objet et/ou qui la transmet à l'unité de détection et d'évaluation après son découplage du jet de liquide.

**Claims**

1. Process to optically scan an object by means of a fine pencil of rays which is moved relative to the object and which is admitted into a light-conducting liquid located above the site of the sanning of the object, whereby the liquid transmits the light onto the site of the scanning and transmits the light reflected from the object back to an optical-electrical sensor and evaluation unit, characterized in that a hydrodynamic pressure or an acceleration force is exerted upon the liquid, thus creating a liquid jet (17, 33, 37, 38, 61, 71, 76, 80) which is directed at the object to be scanned (18, 24, 62, 66, 72, 81) and this liquid jet floods the object at the site of the scanning (16, 63), whereby the light is coupled into the liquid jet and in this jet, it is transmitted onto the object onto the scanning point (16, 33) of the liquid jet, after which the reflected light is transmitted back within the liquid jet, it is then decoupled from the liquid jet and passed to the sensor and evaluation unit (12, 22; 28; 43; 52).

2. Process according to Claim 1, characterized in that the transmitter light (41) is directed at an angle larger than zero from outside of the liquid jet (33) into the scanning point towards the object (24) and the reflected light in the scanning point is then coupled into the liquid jet and this jet is used to transmit the reflected light back.

3. Device to optically scan an object by means of a fine pencil of rays, which can be moved relative to the object and which can be admitted into a light-conducting liquid, having an optical-electrical sensor and evaluation unit to evaluate the reflected light, characterized by

a) a scanning head (5, 25, 26, 36, 36', 40, 42, 55, 69, 73, 77) which is equipped with a nozzle (8, 60, 70, 75) and which is adjacent to the object (18, 24, 62, 66, 72, 81)

b) a conveying system (14) which feeds the light-conducting liquid to the scanning head (5, 25, 26, 36, 36', 40, 42, 55, 69, 73, 77) from a container (13)

c) a pressure or an acceleration force, which is formed into a liquid jet (17, 33, 37, 38, 61, 71, 76, 80) by means of the nozzle (8, 60, 70, 75), is exerted upon the liquid an directed at the object (18, 24, 62, 66, 72, 81)

d) a mechanism (9, 57) inside of the scanning head to couple the transmitted light into the liquid jet and to decouple the reflected light out of the liquid jet in order to pass the reflected light to the sensor and evaluation unit (12, 33; 28; 43; 52).

4. Device according to Claim 3, characterized in that the scanning head (5, 55) has a hollow space (7, 59), in which a feed line (15, 53), starting at the conveying system (14), ends, whereby the device (9 57), namely a lens, which serves to couple and decouple the light, is arranged above the nozzle (8, 60, 70, 75).

5. Device according to Claim 4, characterized in that the light source (27) that serves to generate the transmitter light and/or the sensor device (28) to receive the reflected light is installed inside the scanning head (26).

6. Device according to Claim 3, characterized in that the scanning head (36, 36'; 42) has a number of nozzles to generate a number of liquid jets (33, 37, 38), each of which is associated with a light source (27), a device to couple or decouple the light and a sensor and evaluation unit (28, 43).

7. Device according to Claim 6, characterized in that two liquid jets (37, 38) are directed towards the same scanning point of the object (24) and in that the transmitted and reflected light is introduced into the various liquid jets.

8. Device according to Claim 3 or 4 or 5 or 6 or 7, characterized by at least one transmitting and one receiving fiber optical waveguide (3, 30, 34, 47; 10, 31, 34, 48) each, which are located between the light source (1, 27, 45) or the sensor and evaluation unit (11, 23; 28; 43; 52) and the scanning head (5, 26, 36, 36', 40, 42, 55, 69, 73, 77), and which are carried therein and which end above the device (9, 57) to couple and uncouple.

9. Device according to Claim 3, characterized in that the scanning head consists of a tube (69, 73) into which the liquid is admitted and which is closed at its lower end, whereby the nozzle (70, 75) is peripherally arranged at the circumference of the tube.

10. Device according to Claim 3, characterized by an electrical or mechanical deflecting device (79) for the liquid jet (80), which is arranged beyond the scanning head (77) and which runs through the liquid jet (80) for purposes of controllable deflection.

11. Device according to Claim 4, characterized in that the lens (9, 57) for coupling and/or decoupling is arranged horizontally above the nozzle (8, 60) of the scanning head (5, 55) in the direction of the liquid jet (17, 61) and in the upper area of the hollow space (7, 59).

12. Device according to Claim 3, characterized in that the light is transmitted to the sensor and evaluation unit in a rigid fiber optical waveguide before its coupling into the liquid jet and/or after its decoupling.

13. Device to carry out the process according to Claim 2, having an optical-electrical sensor and evaluation unit to evaluate the reflected light characterized by

a) a scanning head (5, 25, 26, 36, 36', 40, 42, 55, 69, 73, 77) which is equipped with a nozzle (8, 60, 70, 75) and which is adjacent to the object (18, 24, 62, 66, 72, 81)

b) a conveying system (14) which feeds the conducting liquid to the scanning head (5, 25, 26, 36, 36', 40, 42, 55, 69, 73, 77) from a container (13)

c) a pressure or an acceleration force, which is formed into a liquid jet (17, 33, 37, 38, 61, 71, 76, 80) by means of the nozzle (8, 60, 70, 75), is exerted upon the liquid an directed at the object (18, 24, 62, 66, 72, 81)

d) a mechanism (9, 57) inside of the scanning head to carry the transmitted light at an angle greater than zero from outside of the liquid jet in the scanning point onto the object and to decouple the reflected light in the scanning point in the liquid jet, which is used to transmit the reflected light back and

e) a rigid optical fiber waveguide, in which light is transmitted to the sensor and evaluation unit before the scanning point onto the object and/or after its decoupling from the liquid jet.

Fig.1

Fig. 2

Fig. 3

Fig. 4

Fig. 5

Fig. 6

Fig. 7

Fig. 8

Fig. 9

Fig. 10